# FASCICULE DE BREVET EUROPEEN

(11) **EP 0 648 427 B1**
(45) Date de publication et mention de la délivrance du brevet: **16.12.1998**
(21) Numéro de dépôt: 94440059.7
(22) Date de dépôt: 20.09.1994
(51) Int. Cl.: A23G 3/30

(54) **Procédé de production en continu de plusieurs produits de couleur et d'arôme différents à partir d'une même pâte à mâcher**
Verfahren zur kontinuierlichen Herstellung von mehreren Produkten mit unterschiedlichen Farben und Aromen aus derselben Kaugummimasse
Method of continuous production of several products with different colours and aromas from a single chewing-gum mass

(30) Priorité: 20.09.1993 FR 9311373
(43) Date de publication de la demande: 19.04.1995
(73) Titulaire: ROBERT BOSCH GMBH, 70049 Stuttgart (DE)
(72) Inventeur: Towae, Gérard, F-67000 Strasbourg (FR)

(56) Documents cités:
- EP-A- 0 273 809
- FR-A- 2 635 441

## Description

La présente invention se rapporte à un procédé de fabrication en continu de plusieurs produits colorés et aromatisés différemment à partir d'une même pâte neutre à mâcher ou à partir d'un produit neutre analogue ou dérivé.

La production d'un boudin coloré et aromatisé de pâte à mâcher s'effectue classiquement actuellement de la façon suivante comme représenté sur la première figure.

On prépare dans une unité de préparation-cuisson séparée la pâte liquide qui est mélangée à un colorant et à un arôme. A la sortie de cette unité de préparation-cuisson, la pâte chaude liquide est amenée par une conduite à un tambour de refroidissement à une température d'environ 100°C. La sortie de ce tambour alimente un extrudeur par un boudin non conformé de pâte à environ 40°C.

La pâte sort de l'extrudeur conformée selon le profil général souhaité en vue d'une conformation ultérieure de finition et une individualisation fonction de la forme finale : barres, pastilles, bâtonnets, tablettes, coussinets ...

L'homogénéité du produit nécessite l'incorporation du colorant et de l'arôme dès la cuisson.

Ainsi, la spécificité du produit est déterminée dès la sortie de l'unité de cuisson qui, de ce fait, ne peut alimenter qu'une seule ligne de production à la fois.

Pour des raisons de coût notablement élevé, les ateliers de production ne possèdent qu'une seule unité de cuisson par catégorie de produit. Aussi, l'unité de cuisson ne peut-elle desservir qu'une ligne de production à la fois. Lorsqu'un assortiment de produits, tel qu'un assortiment de bonbons, est souhaité, la production de l'unité de préparation-cuisson doit être remise en production à chaque fois pour chaque changement de couleur et de goût.

Ne disposant que d'une unité de préparation-cuisson, la production de chaque lot de produit de couleur-goût différent, au lieu de simultanée, doit être séparée et successive, et par conséquent, limitée dans le temps à puissance égale.

Le document FR-A-2 635 441 décrit la fabrication d'une gomme à mâcher. Le document EP-A-0 273 809 décrit un procédé de fabrication d'une pâte masticatoire.

La présente invention a pour but de permettre l'alimentation simultanée de plusieurs lignes de mise en forme par des produits différents en couleur et en arôme à partir d'une même pâte à mâcher neutre unique pour tous les produits de la même catégorie et de même nature.

Conformément au procédé selon l'invention, une unité unique de préparation-cuisson d'une pâte neutre à mâcher alimente autant de lignes de mise en forme que réclame une production de plusieurs variantes en goût et en couleur d'un même produit de base, dans le cadre par exemple d'un assortiment.

Plus particulièrement, l'unité de préparation-cuisson alimente en parallèle une batterie d'extrudeurs-mélangeurs de type particulier à refroidissement incorporé suivie de tunnels individuels de refroidissement ou d'un tunnel multivoies de refroidissement fournissant en parallèle à chacune des emballeuses individuelles un produit de même couleur et de même goût. Ces produits individuellement emballés, disponibles en vrac, sont ensuite repris par une emballeuse-ensacheuse commune aux différentes lignes de mise en forme.

Par le procédé selon l'invention, il devient possible d'utiliser en continu une seule unité de préparation-cuisson pour plusieurs lignes de mise en forme. Cette unité dessert simultanément plusieurs extrudeurs-mélangeurs pour la production simultanée de produits différents en couleur et en goût à partir d'une même pâte neutre à mâcher.

Connaissant le coût notablement élevé de l'unité de préparation-cuisson, on comprend l'intérêt financier du procédé de l'invention selon lequel ladite unité peut alimenter simultanément et en continu de nombreuses lignes travaillant également simultanément.

Le gain de productivité apparaît de façon particulièrement évidente.

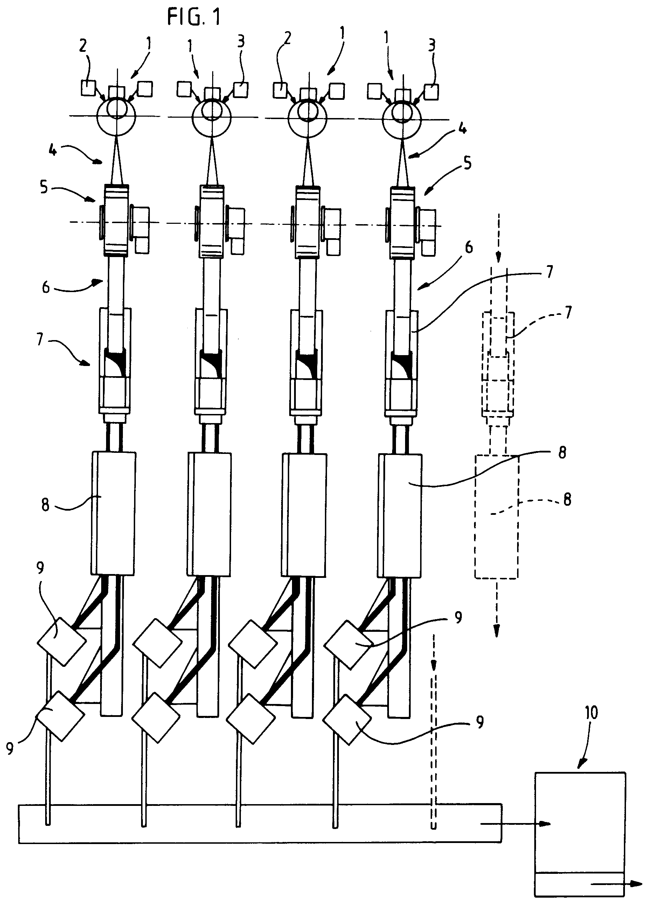

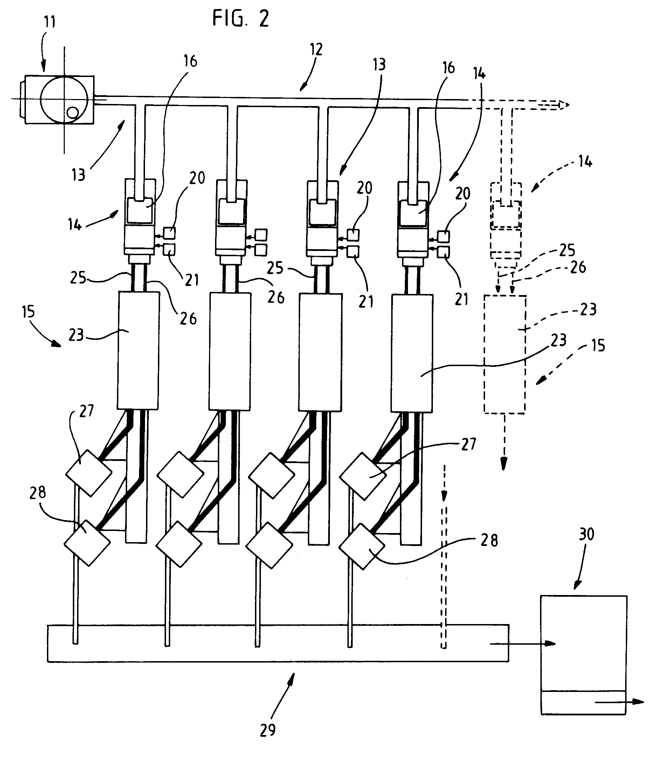

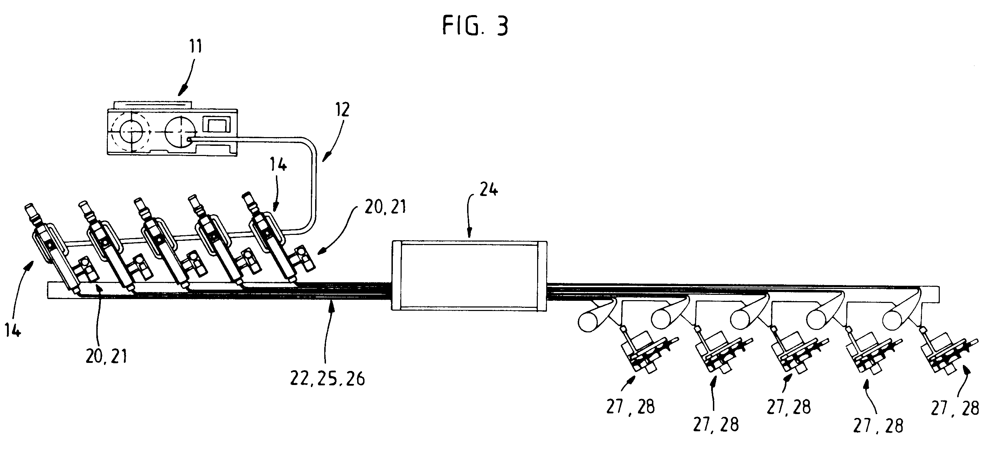

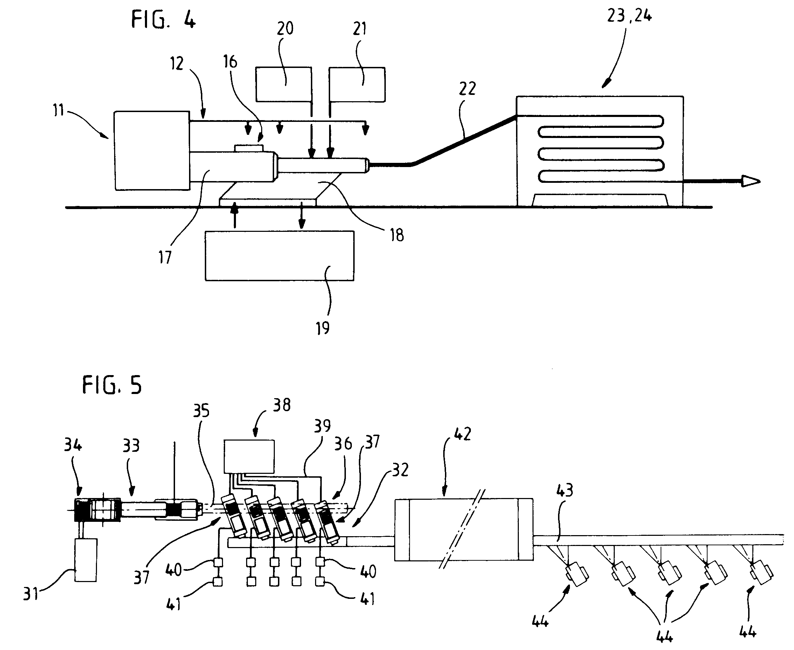

D'autres caractéristiques et avantages de l'invention apparaîtront dans la description qui suit, donnée à titre d'exemple et accompagnée des dessins qui représentent :
. la figure 1 : le schéma d'une unité de production selon l'art antérieur ;
. la figure 2 : le schéma d'une unité de production selon la présente invention avec tunnels de refroidissement séparés ;
. la figure 3 : le schéma d'une unité de production selon la présente invention avec un tunnel de refroidissement commun du type multivoies ;
. la figure 4 : une vue schématique de profil montrant la suite des différentes machines composant une ligne de mise en forme ;
. la figure 5 : le schéma d'une unité de production selon une variante avec pré-refroidissement.

On rappelle ci-après le procédé utilisé selon l'art antérieur tel que représenté sur la figure 1.

La production d'un boudin coloré et aromatisé de pâte à mâcher s'effectue classiquement actuellement de la façon suivante.

Pour chacune des lignes de production d'un produit de couleur et de goût donnés, on devrait préparer dans une unité de préparation-cuisson séparée 1 la pâte liquide qui est mélangée à un colorant et à un arôme par injection directe dans la pâte en cours de préparation à partir de modules 2 et 3. A la sortie de cette unité de préparation-cuisson, la pâte chaude liquide est amenée par une conduite 4 à un tambour de refroidissement 5 à une température d'environ 100°C. La sortie de ce tambour alimente un extrudeur par un boudin non conformé 6 de pâte à 40°C.

La pâte sort de chaque extrudeur 7 conformée selon le profil général souhaité en vue d'un traitement thermique dans un tunnel de refroidissement 8 puis une conformation ultérieure de finition et une individualisation fonction de la forme finale : barres, pastilles, bâtonnets, tablettes, coussinets ... dans des emballeuses individuelles 9 pour être transférée vers une emballeuse-ensacheuse 10.

L'homogénéité du produit nécessite l'incorporation du colorant et de l'arome dès la cuisson. Ainsi, la spécificité du produit est déterminée dès la sortie de l'unité de cuisson qui, de ce fait, ne peut alimenter qu'une seule ligne de production à la fois.

Or, pour des raisons de coût, l'unité de préparation-cuisson est unique et doit par conséquent travailler successivement pour chacune des lignes de production.

La présente invention a pour but de remédier à ces inconvénients et procède de l'idée générale inventive qui consiste à faire produire par une unité de préparation-cuisson unique une pâte liquide neutre c'est-à-dire sans adjonction ni de colorant ni d'arôme, puis à alimenter en parallèle une batterie d'extrudeurs-mélangeurs dans chacun desquels s'effectue l'adjonction du colorant et de l'arôme avant la sortie à l'état pâteux puis la conformation finale individuelle après refroidissement.

Plus particulièrement, la pâte neutre de base est préparée à partir de divers ingrédients tels que de la résine, du glucose et autres produits qui sont cuits selon un procédé spécifique propre au producteur dans une unité de préparation-cuisson 11 unique pour toutes les lignes de production d'un produit de couleur et de goût donnés.

La pâte chaude liquide sortant de l'unité de préparation-cuisson à une température de l'ordre de 100°C est apportée par une conduite commune 12 puis par des tronçons individuels 13 à chacun des extrudeurs 14 regroupés en batterie constituant la principale machine de traitement de chacune des lignes 15 de mise en forme de produits individualisés de même couleur et de même goût.

La pâte neutre est admise en parallèle dans chaque trémie d'alimentation 16 constituant l'entrée de chaque extrudeur 14.

Les extrudeurs 14 sont de type particulier. Il s'agit d'extrudeurs-mélangeurs avec refroidissement incorporé. On les appellera simplement ci-après extrudeurs 14.

Dans chaque extrudeur 14, la pâte liquide alimente un corps de presse 17 refroidi par des circuits de réfrigération 18 reliés à un groupe frigorifique extérieur 19 pour abaisser sa température jusqu'à vers 40°C.

Avant la sortie de la pâte, on injecte séparément et à des endroits différents dans ce corps de presse par des modules 20 et 21 un colorant et un arôme supportés par une base liquide puis on malaxe avec l'un des éléments de la ou des vis d'extrusion dans le but d'homogénéiser le produit pendant son avance vers la sortie.

Chaque boudin de pâte 22 convenablement coloré et aromatisé traverse un tunnel de refroidissement individuel 23 ou commun multivoies 24 avant de subir à température ambiante une conformation individuelle ainsi qu'un emballage dans une emballeuse individuelle.

On distingue des extrudeurs mono-boudin ou bi-boudin 25 et 26. Ces derniers représentés sur les figures 1 et 2 nécessitent deux emballeuses individuelles 27 et 28 par ligne 15 de mise en forme.

Les produits d'une même couleur et d'un même goût déjà individuellement emballés sont alors amenés par une bande de transfert 29 et mélangés à d'autres produits de couleur et de goût différents dans une emballeuse-ensacheuse finale 30 pour constituer un assortiment destiné à la vente.

On peut appliquer de la même façon le procédé selon l'invention dans une chaîne de production ne présentant qu'une seule unité commune de préparation-cuisson telle que 31 pour l'alimentation simultanée de différentes lignes de mise en forme telles que 32, mais aussi une unité commune de pré-refroidissement et de formage 33, par exemple avec tambour 34, comme représenté sur la figure 5. Cette unité commune 31 traite la pâte neutre pour délivrer un boudin primaire 35 de pâte neutre à mâcher apporté par un transporteur 36 à une pluralité d'extrudeurs tels que 37 disposés en parallèle.

Ces extrudeurs 37 sont également du type mélangeurs avec injection individuelle de colorant et d'arôme et avec refroidissement à partir d'une centrale de froid 38 délivrant à chacun des extrudeurs par une conduite double telle que 39 un fluide réfrigérant, par exemple de l'eau glacée. Le colorant et l'arôme propres à la production individuelle de chaque extrudeur sont injectés séparément dans le compartiment des vis de compression par des modules séparés tels que 40 et 41.

Selon cette installation, la batterie d'extrudeurs alimente un tunnel de refroidissement commun multivoies 42. Ce dernier dessert par une bande transporteuse commune 43 une série d'emballeuses individuelles 44 en nombre identique à celui des extrudeurs-mélangeurs pour produire des unités élémentaires consommables qui sont ensuite transportées vers une ensacheuse commune (non représentée) en vue de leur association dans des regroupements unitaires de présentation à la vente en tant qu'assortiment.

Comme indiqué ci-dessus, malgré le stade intermédiaire commun de pré-refroidissement et de pré-formage, les conditions générales de base du procédé selon l'invention sont remplies.

On comprend l'économie intéressante que procure l'invention en faisant travailler une unité de préparation-cuisson unique en permanence pour une pluralité de lignes de formation propres chacune à un produit de goût et de couleur uniques.

## Revendications

1. Procédé de fabrication en continu d'une pâte à mâcher de couleur et de goût différents à partir d'une même pâte neutre à mâcher, caractérisé en ce que l'on prépare une pâte de base neutre dans une unité de préparation-cuisson (11) unique pour plusieurs lignes de mise en forme (15), que l'on alimente avec cette pâte à l'état liquide autant d'extrudeurs (14) avec injection de colorant et d'arôme qu'il existe de produits de couleur et de goût différents élaborés à partir de cette même pâte neutre, que les produits sont admis à la sortie de chaque extrudeur (14) dans une unité de refroidissement ultérieur (23) avant la reprise par une emballeuse individuelle (27,28) propre à chaque ligne (15) suivie d'une emballeuse-ensacheuse commune (30).

2. Procédé selon la revendication 1, caractérisé en ce que les extrudeurs (14) sont des extrudeurs-mélangeurs-refroidisseurs.

3. Procédé selon la revendication 2, caractérisé en ce que les extrudeurs (14) présentent un groupe de refroidissement séparé.

4. Procédé selon l'une quelconque des revendications précédentes, caractérisé en ce que chaque ligne de mise en forme (15) possède son propre tunnel de refroidissement (8).

5. Procédé selon l'une quelconque des revendications précédentes, caractérisé en ce que les lignes de mise en forme (15) aboutissent à un tunnel multivoies (42) alimentant les emballeuses individuelles (27,28).

6. Procédé selon l'une quelconque des revendications précédentes, caractérisé en ce que les extrudeurs-mélangeurs sont précédés par une unité commune de pré-refroidissement et de pré-formage (33) traitant la pâte neutre.

7. Procédé selon la revendication 6, caractérisé en ce que l'unité commune de pré-refroidissement et de pré-formage (33) traitant la pâte neutre forme un boudin primaire.

## Claims

1. Method of continuously producing chewing-gums having different colours and flavours from the same neutral chewing-gum, characterised in that a neutral base gum is prepared in a single preparation-cooking unit (11) for a plurality of shaping lines (15), the gum is fed in the liquid state to as many extruders (14), having injection of colouring and flavouring, as there are products having different colours and flavours produced from the same neutral gum, the products are fed at the outlet of each extruder (14) to a subsequent cooling unit (23) before being taken up by an individual wrapping device (27, 28) for each line (15), which is followed by a common wrapping-bagging device (30).

2. Method according to claim 1, characterised in that the extruders (14) are extruders-mixers-coolers.

3. Method according to claim 2, characterised in that the extruders (14) have a separate cooling unit.

4. Method according to any one of the preceding claims, characterised in that each shaping line (15) has its own cooling duct (8).

5. Method according to any one of the preceding claims, characterised in that the shaping lines (15) end in a multiway tunnel (42) that supplies the individual wrapping devices (27, 28).

6. Method according to any one of the preceding claims, characterised in that the extruders-mixers are preceded by a common pre-cooling and pre-shaping unit (33) that treats the neutral gum.

7. Method according to claim 6, characterised in that the common pre-cooling and pre-shaping unit (33) that treats the neutral gum forms a primary extruded mass.

## Patentansprüche

1. Verfahren zur kontinuierlichen Herstellung einer Kaugummimasse von unterschiedlicher Farbe und Geschmacksrichtung aus ein und derselben neutralen Kaugummimasse,
**dadurch gekennzeichnet,** daß
in einer einzigen Einheit für die Zubereitung und für die Kochvorbereitung (11) zu mehreren Vorrichtungen für die Formung (15) eine neutrale Grundmasse zubereitet wird, daß mit dieser Masse in flüssigem Zustand so viele Extruder (14) bei gleichzeitiger Einspritzung von Farbstoff und von Geschmacksstoff entsprechend den Produkten von unterschiedlicher Farbe und Geschmacksrichtung, wie aus dieser neutralen Kaugummimasse herzustellen sind, beschickt werden, daß am Ausgang von jedem Extruder (14) die Produkte in eine Einheit für eine nachträgliche Kühlung (23) geführt werden, und zwar vor der Aufnahme durch eine eigene Verpakkungseinrichtung (27,28) für jede Vorrichtung für die Formung (15) mit nachgeschalteter gemeinsamen Verpackungs-Einsack-Einrichtung (30).

2. Verfahren nach Anspruch 1,
**dadurch gekennzeichnet,** daß
die Extruder (14) als Extruder-Mischer-Kühler ausgebildet sind.

3. Verfahren nach Anspruch 2,
**dadurch gekennzeichnet,** daß
die Extruder (14) eine getrennte Kühleinheit aufweisen.

4. Verfahren nach einem der vorstehenden Ansprüche,
**dadurch gekennzeichnet,** daß
jede Vorrichtung für die Formung (15) ihren eigenen Kühltunnel (8) besitzt.

5. Verfahren nach einem der vorstehenden Ansprüche,
**dadurch gekennzeichnet,** daß
die Vorrichtungen für die Formung (15) in einem Mehrwegtunnel (42) münden, aus dem die eigenen Verpackungseinrichtungen (27,28) beschickt werden.

6. Verfahren nach einem der vorstehenden Ansprüche,
**dadurch gekennzeichnet,** daß
den Extruder-Mischern eine gemeinsame Einheit für eine Vorkühlung und für eine Vorformung (33) vorgeschaltet wird, in der die neutrale Masse behandelt wird.

7. Verfahren nach Anspruch 6,
**dadurch gekennzeichnet,** daß
die gemeinsame Einheit für eine Vorkühlung und für eine Vorformung (33), die die neutrale Masse behandelt, einen primären Strang bildet.
